(19) Europäisches Patentamt / European Patent Office / Office européen des brevets

(11) **EP 3 658 895 B1**

(12) **FASCICULE DE BREVET EUROPEEN**

(45) Date de publication et mention
de la délivrance du brevet:
**09.06.2021 Bulletin 2021/23**

(21) Numéro de dépôt: **18737870.8**

(22) Date de dépôt: **03.07.2018**

(51) Int Cl.:
*G01N 21/33* *(2006.01)*    *G01M 15/10* *(2006.01)*
*F01N 11/00* *(2006.01)*

(86) Numéro de dépôt international:
**PCT/EP2018/067930**

(87) Numéro de publication internationale:
**WO 2019/020326 (31.01.2019 Gazette 2019/05)**

(54) **PROCEDE ET SYSTEME DE MESURE OPTIQUE DE LA CONCENTRATION D'ESPECES GAZEUSES DE GAZ D'ECHAPPEMENT**

VERFAHREN UND VORRICHTUNG ZUR OPTISCHEN BEMESSUNG DER KONZENTRATION CHEMISCHER SPEZIES IN EINEM ABGAS

METHOD AND SYSTEM FOR OPTICAL MEASUREMENT OF THE CONCENTRATION OF CHEMICAL SPECIES IN AN EXHAUST GAS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.07.2017 FR 1757140**

(43) Date de publication de la demande:
**03.06.2020 Bulletin 2020/23**

(73) Titulaire: **IFP Energies nouvelles**
**92852 Rueil-Malmaison (FR)**

(72) Inventeurs:
• **LECOMPTE, Matthieu**
  **69440 Taluyers (FR)**
• **SCHIFFMANN, Philpp**
  **92500 Rueil Malmaison (FR)**
• **LAGET, Olivier**
  **92500 Rueil-Malmaison (FR)**
• **HAYRAULT, Pascal**
  **92500 Rueil Malmaison (FR)**

(56) Documents cités:
EP-A1- 1 965 194    EP-A2- 0 107 535
WO-A1-2005/064315    GB-A- 2 433 316
US-A1- 2015 308 962

• **GERARD DOOLY ET AL: "Low Concentration Monitoring of Exhaust Gases Using a UV-Based Optical Sensor", IEEE SENSORS JOURNAL, IEEE SERVICE CENTER, NEW YORK, NY, US, vol. 7, no. 5, 1 mai 2007 (2007-05-01), pages 685-691, XP011176691, ISSN: 1530-437X, DOI: 10.1109/JSEN.2007.894133**

## Description

### Domaine de l'invention

La présente invention concerne la mesure de la concentration d'espèces chimiques contenues dans des gaz d'échappement et de la température de tels gaz, de préférence issus d'un moteur à combustion interne, au moyen d'un système optique.

La présente invention s'applique avantageusement au domaine de la dépollution des gaz d'échappement et de surveillance des émissions polluantes des gaz d'échappement.

### Contexte général

Les normes d'émission de substances polluantes issues de la combustion dans des moteurs thermiques requièrent dorénavant, dans la plupart des cas, la réduction des concentrations de ces substances, par exemple à l'aide de traitements catalytiques post combustion.

Les substances polluantes dans les gaz d'échappement sont classiquement des hydrocarbures imbrûlés, le monoxyde de carbone (CO), le monoxyde d'azote (NO) et le dioxyde d'azote ($NO_2$) communément désignés sous l'acronyme $NO_X$, le protoxyde d'azote $N_2O$, l'ammoniac ($NH_3$), les composés soufrés tel que le sulfure d'hydrogène ($H_2S$) ou les oxydes de soufre comme le dioxyde de soufre ($SO_2$), l'ozone $O_3$, etc. Certaines de ces substances font l'objet de réglementations strictes, selon lesquelles des concentrations limites doivent être respectées lors du rejet à l'atmosphère. Les NOx par exemple ont un impact néfaste directement sur la santé de l'être humain et indirectement par la formation secondaire d'ozone troposphérique. La réglementation impose d'ores et déjà un contrôle de la concentration du groupe NOx formé par ces oxydes d'azote, et pourra être amenée à évoluer pour imposer le contrôle de chaque oxyde d'azote de manière individuelle, par exemple le $NO_2$. A propos des NOx, il est connu de mettre en œuvre sur la ligne d'échappement des gaz un système de réduction catalytique sélective (SCR) qui permet de réduire sélectivement les NOx en azote grâce à l'action d'un agent réducteur généralement injecté en amont du système SCR, par exemple de l'ammoniac ou un composé générant de l'ammoniac par décomposition, comme de l'urée. Ainsi, l'ammoniac représente également une substance pour laquelle une surveillance de la concentration peut être utile, non seulement dans le cadre d'un contrôle des concentrations imposé par les normes actuelles ou à venir, mais également dans un objectif de diagnostic et/ou de contrôle du système de dépollution.

Dans ce contexte, il est avantageux de pouvoir procéder à la mesure de la concentration des substances polluantes, notamment afin de contrôler et/ou de diagnostiquer les systèmes de dépollution post combustion.

La mise au point de capteurs et de méthodes adaptés à la mesure de chaque substance polluante revêt ainsi un intérêt majeur.

Il est connu des systèmes de quantification d'ammoniac, et d'autres composés chimiques contenus dans des gaz d'échappement, par utilisation d'une source de lumière émettant dans l'Infra-Rouge (IR) ou l'Ultraviolet (UV).

La demande de brevet US2013/0045541 décrit par exemple un capteur et une méthode de détermination de la concentration d'une ou plusieurs espèces gazeuses dans des gaz d'échappement d'un moteur à combustion interne, basés sur une mesure optique et mettant en œuvre une source de lumière IR ou UV. Selon cet art antérieur, les espèces chimiques dont on souhaite déterminer la concentration sont transformées dans une chambre catalytique en espèces chimiques secondaires qui interagissent, par absorption ou diffusion, avec de la lumière IR ou UV. L'analyse spectrale de la lumière ayant traversé ces espèces chimiques secondaires permet ensuite d'estimer la concentration des espèces gazeuse initiales. Ainsi l'estimation de la concentration d'ammoniac peut être effectuée de manière indirecte par la mesure d'oxydes d'azote issus de la transformation catalytique de l'ammoniac. Un inconvénient de cette méthode consiste en la nécessité de transformer via une chambre catalytique les espèces chimiques pour avoir accès à leur concentration, fournissant une mesure indirecte moins précise qu'une mesure directe, et nécessitant un équipement d'analyse encombrant et complexe devant intégrer une chambre catalytique. En outre, il n'est pas possible, selon cette méthode, d'effectuer une mesure dissociée de la concentration des oxydes d'azote NO et $NO_2$.

On connait une autre méthode, décrite dans le brevet EP0107535, qui évoque le principe d'absorption du rayonnement UV par certains composés de gaz d'échappement et l'exploitation de ce principe pour régler la combustion d'un moteur thermique, et notamment évaluer la richesse d'alimentation du moteur. Selon cette méthode, on détecte un traceur de la qualité de la combustion par mesure optique. Ce traceur consiste en des composés ajoutés au combustible ou à l'air de combustion, avant l'entrée dans la chambre de combustion. Ces composés sont des composés normalement détruits par la combustion, par exemple des composés aromatiques comme le benzène ou le toluène, ou des composés réagissant plus ou moins en liaison avec la qualité de la combustion en fournissant au moins un produit qui absorbe le rayonnement UV. Cependant cette méthode est limitée à la détection de la richesse des gaz de combustion, et implique l'addition de composés spécifiques aux gaz d'échappement, qui peuvent être indésirables dans une optique de dépollution des gaz d'échappement. De plus, EP0107535 ne décrit aucune mesure optique de la concentration de substances polluantes des gaz d'échappement telles que les NOx ou des composés soufrés comme l'H$_2$S ou les oxydes de soufre

Le document US 2015/308962 A1 décrit un procédé de mesure in situ de la concentration d'au moins une espèce chimique gazeuse contenue dans des gaz d'échappement circulant dans une ligne d'échappement au moyen d'un système de mesure optique comprenant au moins une source lumineuse d'un rayonnement UV et un spectromètre.

Il existe également des capteurs optiques commercialisés qui peuvent être utilisés pour l'analyse de gaz. Cependant, la plupart de ces capteurs sont soient encombrants, ne permettant pas une mesure in situ dans des lignes d'échappement de véhicules, soient il ne fournissent pas une mesure mais sont des sondes sensibles à la présence de certaines espèces chimiques gazeuses, soient nécessitent un système de prélèvement de gaz rendant le dispositif complexe et la mesure moins fiable.

Par ailleurs, un autre type d'information revêt une importance majeure dans le domaine de la dépollution des gaz d'échappement : la température des gaz d'échappement. La connaissance de la température des gaz d'échappement, simultanément à celle des concentrations en substances polluantes, permet d'accéder à un niveau d'information supplémentaire extrêmement utile pour contrôler et/ou diagnostiquer les systèmes de dépollution post combustion. Cependant, l'accès à l'information de température est classiquement réalisé à l'aide d'un capteur dédié (thermocouple), qui ajoute à la complexité de la mise en œuvre de la mesure.

**Objectifs et résumé de l'invention**

La présente invention a pour objectif de fournir une mesure optique in situ de la concentration d'espèces chimiques gazeuses contenues dans des gaz d'échappement et de la température de tels gaz d'échappement, au moyen d'un seul et même système de mesure optique.

La présente invention vise également à satisfaire au moins l'un des objectifs suivants :

- résoudre, au moins partiellement, les problèmes mentionnés plus haut en relation avec les procédés et systèmes connus de quantification de composés chimiques dans des gaz d'échappement ;
- fournir un système de mesure optique de la concentration d'espèces chimiques gazeuses de gaz d'échappement et de la température desdits gaz d'échappement qui soit compact et qui puisse être embarqué dans un véhicule ;
- permettre une mesure dissociée, c'est-à-dire individuelle, de différentes espèces chimiques gazeuses contenues dans les gaz d'échappement, par exemple de NO, NO$_2$ et NH$_3$;
- permettre de quantifier simultanément la concentration de différentes espèces chimiques gazeuses contenues dans les gaz d'échappement ;
- permettre le diagnostic et/ou le contrôle d'un système de dépollution post combustion à partir de mesures de la température des gaz d'échappement et de la concentration d'espèces chimiques gazeuses contenues dans lesdits gaz d'échappement au moyen d'un seul et même système de mesure optique.

Ainsi, pour atteindre au moins l'un des objectifs susvisés, parmi d'autres, la présente invention propose, selon un premier aspect, un procédé de mesure in situ de la concentration [X] d'au moins une espèce chimique gazeuse contenue dans des gaz d'échappement circulant dans une ligne d'échappement et de la température des gaz d'échappement au moyen d'un système de mesure optique, le système de mesure optique comprenant au moins une source lumineuse et un spectromètre, comportant les étapes suivantes :

- l'émission par la source lumineuse d'un rayonnement UV à travers les gaz d'échappement au sein d'une zone de mesure située dans la ligne d'échappement ;
- la détection par le spectromètre d'au moins une partie du rayonnement UV ayant traversé les gaz d'échappement dans la zone de mesure et la génération d'un signal numérique de l'intensité lumineuse en fonction de la longueur d'onde W de la partie du rayonnement UV ayant traversé les gaz d'échappement;
- l'estimation de la concentration [X] de l'espèce chimique et de la température T des gaz d'échappement à partir dudit signal numérique.

Selon un mise en œuvre de l'invention, le système de mesure optique comporte en outre un réflecteur, et le procédé comprend une étape dans laquelle le rayonnement UV émis par la source de lumière traverse les gaz d'échappement dans la zone de mesure pour ensuite être réfléchi par le réflecteur, traverse à nouveau les gaz d'échappement dans la zone de mesure en sens inverse pour être ensuite détecté par le spectromètre.

Selon un mise en œuvre de l'invention, le procédé comprend une étape préalable de calibration du système de mesure optique pour fournir un signal numérique de référence de l'intensité lumineuse en fonction de la longueur d'onde, de préférence par émission du rayonnement UV à travers un gaz de référence, par exemple un gaz de référence ne contenant aucune des espèces chimiques à mesurer, et par détection d'au moins une partie du rayonnement UV ayant traversé le gaz de référence pour fournir un signal numérique de référence de l'intensité lumineuse en fonction de la longueur d'onde de la partie du rayonnement UV ayant traversé le gaz de référence.

Selon un mise en œuvre de l'invention, l'étape d'estimation de la concentration [X] de ladite espèce chimique et de la température T des gaz d'échappement comporte :

- la détermination de l'absorbance A des gaz d'échappement en fonction de la longueur d'onde à partir dudit signal numérique de l'intensité lumineuse en fonction de la longueur d'onde de la partie du rayonnement UV ayant traversé les gaz d'échappement et d'un signal numérique de référence ;
- la détermination de la concentration [X] de ladite au moins une espèce chimique à partir de l'absorbance desdits gaz d'échappement et de caractéristiques prédéterminées d'absorbance, de température et de pression de l'espèce chimique ;
- la détermination de la température T des gaz d'échappement par modification du coefficient d'extinction molaire de l'absorbance de l'espèce chimique extraite de l'absorbance des gaz d'échappement, la modification étant un décalage de la longueur d'onde ou une modification de l'amplitude ou une combinaison des deux.

De préférence, l'absorbance A des gaz d'échappement est une fonction de la longueur d'absorbance, du nombre de densité des molécules de l'espèce chimique et du coefficient d'extinction molaire.

Selon un mise en œuvre de l'invention, le rayonnement UV émis a une longueur d'onde comprise entre 180 et 400 nm, de préférence comprise entre 180 et 280 nm, et encore plus préférentiellement comprise entre 180 et 240 nm.

De préférence, on mesure la concentration d'au moins une, et de préférence plusieurs, espèces chimiques gazeuses contenues dans les gaz d'échappement, et comprises dans la liste constituée par : $NO$, $NO_2$, $N_2O$, BTX, $SO_2$, $H_2S$, $O_3$, $O_2$, $H_2O$, les aldéhydes comme l'acétaldéhyde ou le formaldéhyde, des hydrocarbures non aromatiques comme l'acétylène ou le buta-1,3-diène.

Selon un mise en œuvre de l'invention, on mesure simultanément la concentration d'au moins deux espèces chimiques gazeuses, et de préférence d'au moins la concentration de NO et la concentration de $NO_2$.

On peut appliquer cette mise en œuvre au contrôle des NOx en sortie d'un système de dépollution, de préférence en sortie d'un système de réduction catalytique sélective, ou appliqué au contrôle des NOx en amont et en aval d'un système de dépollution, dans laquelle on mesure au moins la concentration de NO et la concentration de $NO_2$, de préférence pour estimer la conversion en temps réel des NOx en $N_2$ par le système de dépollution.

Selon un mise en œuvre de l'invention, on mesure la concentration d'au moins une espèce chimique gazeuse choisie parmi les espèces chimiques soufrées $SO_2$ et $H_2S$, et de préférence les deux.

Selon un mise en œuvre de l'invention, on mesure la concentration d'au moins $NH_3$.

On peut appliquer cette mise en œuvre au contrôle du $NH_3$ en amont ou en aval d'un système de réduction catalytique sélective, dans laquelle on surveille l'évolution de la concentration en $NH_3$ en amont ou en aval du système de réduction catalytique sélective.

Avantageusement, les gaz d'échappement sont issus d'un moteur à combustion interne.

Selon un mise en œuvre de l'invention, le rayonnement UV traverse les gaz d'échappement selon un chemin optique sensiblement perpendiculaire au parcours P des gaz d'échappement.

Selon un mise en œuvre de l'invention, la mesure in situ est effectuée en aval d'au moins un système de dépollution des gaz d'échappement tel qu'un catalyseur à oxydation diesel, un système de réduction catalytique sélective ou un filtre à particules.

Selon un mise en œuvre de l'invention, la mesure in situ est effectuée en amont d'au moins un système de dépollution des gaz d'échappement tel qu'un catalyseur à oxydation diesel, un système de réduction catalytique sélective ou un filtre à particules.

Selon un deuxième aspect, la présente invention propose un système de mesure optique pour la mesure in situ selon l'invention de la concentration [X] d'au moins une espèce chimique gazeuse contenue dans des gaz d'échappement circulant dans une ligne d'échappement et de la température T des gaz d'échappement, le système comportant :

- une source lumineuse susceptible d'émettre un rayonnement UV à travers les gaz d'échappement au sein d'une zone de mesure située dans la ligne d'échappement, la source lumineuse étant de préférence positionnée de manière à émettre le rayonnement UV selon un chemin optique sensiblement perpendiculaire au parcours P des gaz d'échappement ;
- un spectromètre susceptible de détecter au moins une partie du rayonnement UV ayant traversé les gaz d'échappement dans la zone de mesure et la génération d'un signal numérique de l'intensité lumineuse en fonction de la longueur d'onde W de la partie du rayonnement UV ayant traversé les gaz d'échappement;
- des moyens d'analyse et de traitement dudit signal pour déterminer la concentration [X] de l'espèce chimique et la température T des gaz d'échappement à partir dudit signal numérique.

D'autres objets et avantages de l'invention apparaîtront à la lecture de la description qui suit d'exemples de réalisations particuliers de l'invention, donnés à titre d'exemples non limitatifs, la description étant faite en référence aux figures annexées décrites ci-après.

**Brève description des figures**

La figure 1A est un schéma illustrant la mesure optique de la concentration d'espèces chimiques contenues dans des gaz d'échappement et de la température de tels gaz, selon un mode de réalisation de l'invention.
La figure 1B est un schéma illustrant la mesure optique de la concentration d'espèces chimiques contenues dans des gaz d'échappement et de la température de tels gaz, selon un autre mode de réalisation de l'invention.
La figure 2 représente schématiquement l'absorbance des gaz d'échappement comportant différentes espèces chimiques gazeuses A, B, C que l'on souhaite mesurer.
La figure 3 représente schématiquement l'influence de la température sur l'absorbance d'une espèce chimique donnée contenue dans les gaz d'échappement.
Les figures 4 à 14 sont des schémas illustrant différentes mises en œuvre de l'invention dans le cadre de la dépollution des gaz d'échappement.

Sur les figures, les mêmes références désignent des éléments identiques ou analogues.

**Description de l'invention**

L'objet de l'invention est de proposer un procédé de mesure in situ de la concentration d'au moins une espèce chimique gazeuse contenue dans des gaz d'échappement et de la température de tels gaz circulant dans une ligne d'échappement au moyen d'un système de mesure optique 40.
De préférence, les gaz d'échappement sont issus d'un moteur à combustion interne.

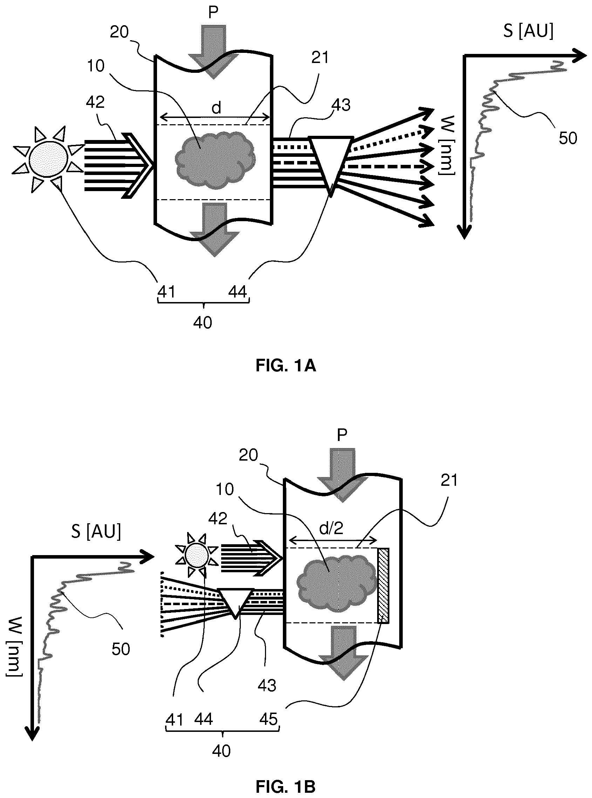

Les figures 1A et 1B représentent schématiquement le principe de mesure selon l'invention. La figure 1A diffère de la figure 1B par le système de mesure optique, qui est selon une configuration transmissive dans la figure 1A et selon une configuration réflective dans la figure 1B.
La présente invention permet une mesure in situ, c'est-à-dire directement dans la ligne d'échappement 20 des gaz 10, et sans prélèvement d'échantillon(s) des gaz ni transformation ou pré-conditionnement dudit gaz, typiquement une transformation d'une espèce chimique non mesurable en d'autres espèces chimiques mesurables, à des fins de mesure.
La mesure selon l'invention est donc non intrusive, et présente l'avantage de ne pas modifier l'écoulement des gaz d'échappement et d'être instantanée, par exemple avec un temps de réponse pouvant être inférieur à 0,1 s, contrairement aux méthodes connues par prélèvement des gaz, dans lesquelles il y a un rajout de contre pression, une évolution possible des gaz à analyser lors du prélèvement, qui est non souhaitée, et un transit des gaz jusqu'à la cellule de mesure provoquant un délai dans la mesure.
Le système de mesure optique selon l'invention, permettant une mesure in situ, peut ainsi être aisément embarqué dans un véhicule, ou tout autre engin mobile comprenant une ligne d'échappement de gaz d'échappement issus d'un moteur à combustion interne.
Le système de mesure optique comprend au moins une source lumineuse 41 et un spectromètre 44.
Le procédé de mesure comporte les étapes suivantes :

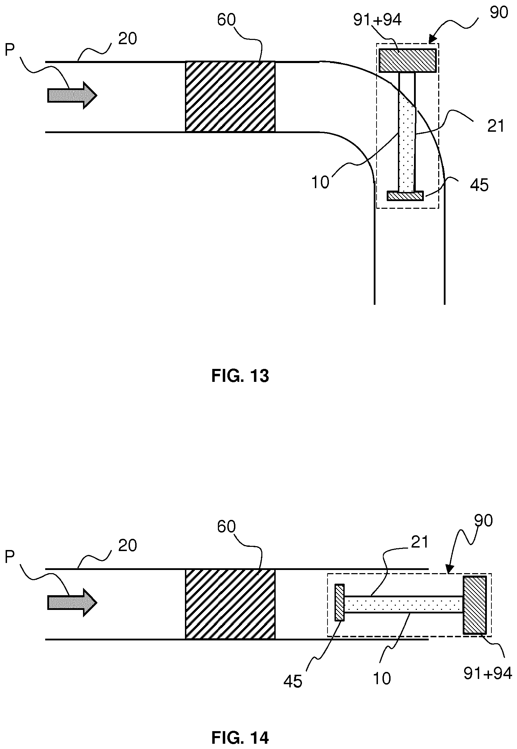

- l'émission par la source lumineuse 41 d'un rayonnement UV 42 à travers les gaz d'échappement 10 au sein d'une zone de mesure 21 située dans la ligne d'échappement 20. Le rayonnement UV 42 traverse les gaz d'échappement, selon un chemin optique, de longueur d, qui peut être sensiblement perpendiculaire au parcours P des gaz d'échappement, tel que représenté dans les figures 1A et 1B. Selon une configuration alternative, le chemin optique peut être différent, par exemple sensiblement tangent ou parallèle au parcours P des gaz d'échappement, dans le cas où le système optique comprend un réflecteur comme représenté à la figure 1B, et est positionné de manière spécifique, tel que décrit en relation avec les figures 13 et 14 plus loin. Le rayonnement UV 42 entre dans la zone de mesure située dans la ligne d'échappement par un accès optique, par exemple un hublot ou une lentille.

- La détection par le spectromètre 44 d'au moins une partie 43 du rayonnement UV ayant traversé les gaz d'échappement dans la zone de mesure 21, et la génération d'un signal numérique 50 de l'intensité lumineuse en fonction de la longueur d'onde de la partie du rayonnement UV ayant traversé les gaz d'échappement. Les espèces chimiques gazeuses dont on souhaite mesurer la concentration absorbent une partie du rayonnement UV et chaque espèce chimique gazeuse absorbe les rayons à certaines longueurs d'ondes données. L'absorption suit, sous des conditions idéales, la loi de Beer-Lambert. Le rayonnement UV ayant traversé les gaz d'échappement est détecté par le spectromètre 44 à travers un autre accès optique, comme pour l'émission par la source lumineuse.

- l'estimation de la concentration [X] de l'espèce chimique gazeuse et de la température T des gaz d'échappement 10 à partir du signal numérique 50.

Alors que la configuration est transmissive dans le mode de réalisation représenté à la figure 1A, la configuration est réflective dans le mode de réalisation représenté à la figure 1B. Selon cette configuration réflective, le système optique 40 comprend en outre un réflecteur 45. Le rayonnement UV émis par la source 41 est réfléchi par le réflecteur 45, positionné à l'extrémité de la zone de mesure 21 opposée à l'extrémité où se trouvent la source lumineuse 41 et le spectromètre 44. Le réflecteur 45 est de préférence positionné dans la ligne d'échappement 20, tel qu'illustré à la figure 1B. Il peut alternativement être intégré à la paroi de la ligne d'échappement, ou être disposé à l'extérieur de celle-ci. Le rayonnement UV 42 traverse une première fois les gaz d'échappement 10 dans la zone de mesure 21, est réfléchi par le réflecteur 45, traverse une deuxième fois en sens inverse les gaz d'échappement dans la zone de mesure 21, et est ensuite détecté par le spectromètre 44, tel que décrit plus haut.

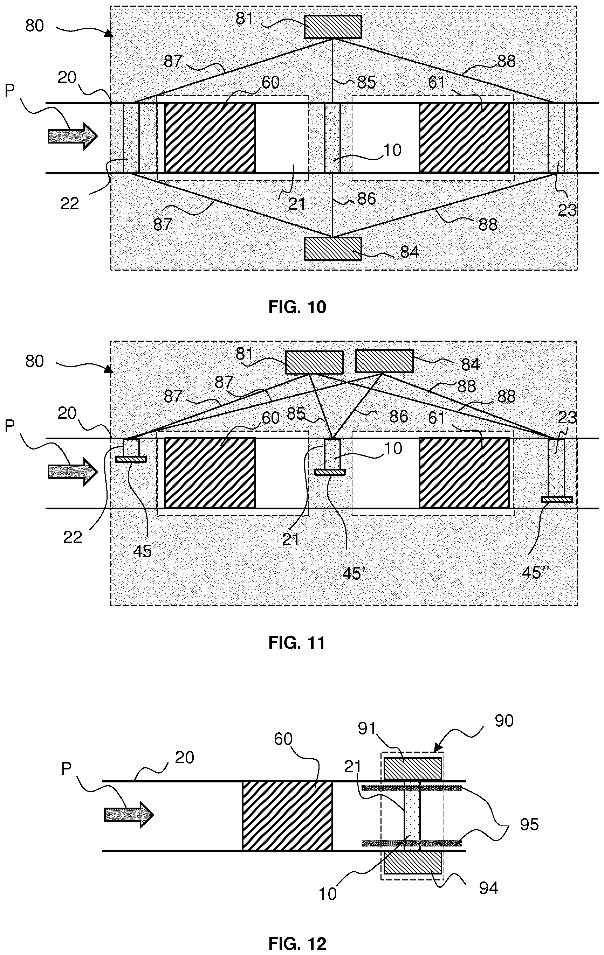

Que ce soit dans le cas d'une configuration transmissive ou réflective, la source lumineuse 41 et le spectromètre 44 sont de préférence positionnés à l'extérieur de la ligne d'échappement, par exemple sur la face externe des parois de la ligne, ou à distance de la ligne si des moyens de transmission du rayonnement sont prévus, tel que par exemple des fibres optiques comme représenté aux figures 10 et 11 et décrites plus loin. Cela permet notamment d'éviter l'endommagement de ces éléments optiques du fait des températures élevées pouvant être rencontrées dans les gaz d'échappement.

Le procédé selon l'invention comporte de préférence une étape préalable de calibration du système de mesure optique permettant d'obtenir un signal numérique de référence de l'intensité lumineuse en fonction de la longueur d'onde. De préférence, cette étape consiste à émettre le rayonnement UV à travers un gaz de référence, par exemple un gaz ne contenant aucune des espèces chimiques à mesurer, comme de l'hélium, du diazote ou de l'air, ou à travers un gaz de référence qui contient certaines espèces chimiques que l'on souhaite mesurer et dont on connait la concentration dans ledit gaz. Le rayonnement traverse le gaz de référence, et est ensuite détecté par le spectromètre pour fournir un signal numérique de référence de l'intensité lumineuse en fonction de la longueur d'onde de la partie du rayonnement UV ayant traversé le gaz de référence. Le signal de référence est utilisé dans l'étape d'estimation de la concentration et de la température, en particulier pour calculer l'absorbance des gaz d'échappement, comme décrit en détails plus bas.

Par gaz d'échappement, il est entendu les gaz d'échappement provenant d'un moteur à combustion interne, notamment, mais pas exclusivement, pour véhicule automobile. Cependant cela n'écarte en aucune manière tous les autres types de gaz d'échappement résultant d'une combustion, comme ceux issus de chaudières ou de fours, et circulant dans une cheminée ou un conduit d'évacuation pouvant intégrer le système de mesure optique décrit ici. La présente invention peut ainsi s'appliquer aux fumées industrielles dont on souhaite mesurer la température et la concentration en certaines espèces chimiques sous forme gazeuse.

Le rayonnement UV émis par la source lumineuse 42 a une longueur d'onde comprise entre 180 et 400 nm, de préférence comprise entre 180 et 280 nm, et plus préférentiellement comprise entre 180 et 240 nm. Cette gamme de longueur d'onde fait partie de ce qu'on désigne par UV profond.

A titre d'exemple, la source lumineuse peut être une diode LED émettant dans l'UV et en particulier dans l'UV profond tel qu'indiqué ci-dessus, ou peut-être une lampe au xénon, au deutérium, au zinc, au cadmium, ou une autre lampe à gaz comme les lampes excimères KrBr, KrCL, KrF.

Le spectromètre permet d'analyser le signal lumineux dans la gamme de longueur d'onde 180-400 nm, de préférence 180-280 nm, et plus préférentiellement 180-240 nm. Alternativement un système simplifié permettant d'analyser une gamme de longueur d'ondes réduite peut être utilisé. On conserve le terme de spectromètre dans la présente invention pour désigner un tel système simplifié.

L'ensemble formé par la source lumineuse UV et le spectromètre, aussi appelé capteur optique dans la présente invention, est connu en soi. De tels capteurs optiques peuvent être trouvés dans le commerce.

Le capteur optique peut comporter d'autres éléments, notamment des éléments optiques tels que des lentilles permettant de modifier le faisceau lumineux si nécessaire (par exemple convergence ou divergence), ou encore des éléments de protection visant à protéger la source lumineuse et le spectromètre, en particulier lors d'un fonctionnement à froid du système de mesure optique. En effet, le fonctionnement à froid peut provoquer des dépôts sur les éléments optiques par un phénomène de condensation. De tels éléments de protection sont décrits plus bas, en relation avec la figure 12. La position du capteur installé sur la ligne d'échappement peut être choisie de manière à limiter l'encrassement de celui-ci. Par exemple le capteur peut être positionné en sortie d'un filtre à particules (FAP) dans le cas où la ligne d'échappement comprenne un tel FAP.

Selon l'invention, on peut effectuer la mesure d'au moins une espèce chimique gazeuse X, et de préférence plusieurs espèces chimiques gazeuses X, comprises dans la liste constituée de manière non limitative par : NO, $NO_2$,

N$_2$O, NH$_3$, BTX, SO$_2$, H$_2$S, O$_3$, O$_2$, H$_2$O, les aldéhydes comme l'acétaldéhyde ou le formaldéhyde, des hydrocarbures non aromatiques comme l'acétylène ou le buta-1,3-diène.

De préférence, on effectue la mesure d'au moins une, et plus préférentiellement de plusieurs, espèces chimiques gazeuses comprises dans la liste constituée par : NO, NO$_2$, N$_2$O, NH$_3$, BTX, SO$_2$, H$_2$S, O$_3$, O$_2$, H$_2$O.

L'acronyme BTX se réfère au benzène, au toluène et aux xylènes appartenant à la famille des hydrocarbures aromatiques.

Avantageusement, on peut effectuer la mesure dissociée et simultanée de la concentration d'une pluralité de ces espèces chimiques gazeuses.

Par mesure dissociée, on entend un accès à la concentration propre de chaque espèce chimique, par opposition à une mesure globale de la concentration de plusieurs espèces chimiques sans distinction, comme ce peut être le cas des NOx dans certaines méthodes connues.

Par exemple, on procède, selon l'invention, à la mesure simultanée de la concentration d'au moins deux espèces chimiques gazeuses, de préférence au moins la concentration de NO et la concentration de NO$_2$.

Les oxydes d'azote NO et NO$_2$, représentent des polluants atmosphériques réglementés, qu'il est avantageux de mesurer.

Une telle mesure permet ainsi un contrôle des NOx en sortie d'un système de dépollution post combustion, de préférence en sortie d'un système SCR, ou un contrôle des NOx en amont et en aval d'un système de dépollution, de préférence d'un système SCR, pour estimer par exemple la conversion en temps réel des NOx en N$_2$ par ledit système de dépollution, et tout en contrôlant l'apport de NH3.

Le système SCR permet de réduire de manière sélective les NOx par un agent réducteur sur un catalyseur dédié. La réduction est dite sélective car l'agent réducteur réduit les NOx et non l'oxygène présent dans le mélange à brûler. Grâce à un tel système de dépollution, les NOx sont convertis en diazote N$_2$. Cet agent réducteur, en particulier pour une utilisation avec un moteur à combustion interne d'un véhicule automobile, est soit de l'ammoniac (ou une matière pouvant se décomposer en de l'ammoniac), soit un hydrocarbure oxygéné ou non, soit un mélange d'hydrocarbures pouvant contenir en partie ou en totalité un ou plusieurs hydrocarbures oxygénés. Dans le cas d'un traitement des gaz d'échappement avec une SCR par l'ammoniac par exemple, l'agent ammoniacal utilisé est stocké soit sous forme de complexes solides, soit sous forme de précurseur liquide, comme de l'urée en solution aqueuse.

La mesure de NO et NO$_2$ permet ainsi un contrôle des NOx en amont et en aval d'un système SCR utilisant un agent ammoniacal, pour estimer par exemple la conversion en temps réel des NOx en N$_2$ par ledit système de dépollution tout en contrôlant l'apport de NH$_3$.

Grâce à une mesure de NO dissociée de celle du NO$_2$, il est possible de connaître le rapport molaire NO/NO$_2$ composant les NOx.

Il est intéressant de connaître le rapport NO/NO$_2$ car la réaction de réduction des NOx avec l'ammoniac est différente en fonction de ce rapport (plus rapide lorsque NO et NO$_2$ sont en quantités équivalentes). De plus NO$_2$ est utile pour aider à l'oxydation des suies présentes dans un FAP par exemple.

Ainsi, si le système de mesure optique comporte deux capteurs optiques respectivement placés en amont et en aval du système de dépollution des NOx, il est alors possible de connaître la conversion en temps réel des NOx en N$_2$. Un système de diagnostic électronique embarqué (OBD pour On-Board Diagnostics selon la terminologie anglo-saxonne) incluant le diagnostic de NO$_2$ est alors possible, un tel diagnostic pouvant être requis à l'avenir par la règlementation sur les émissions polluantes des moteurs à combustion interne de véhicules roulants.

Selon l'invention, on peut également effectuer la mesure de la concentration d'au moins le SO$_2$, ou l'H$_2$S, et de préférence d'au moins les deux. La quantification des éléments soufrés permet par exemple de faire le diagnostic d'un possible empoisonnement d'un système de dépollution post combustion pouvant être lié à l'utilisation de carburants à forte teneur en soufre, ou de contrôler les émissions des navires évoluant en zone d'émission contrôlée de soufre (SECA).

Avantageusement, on mesure la concentration d'au moins NH$_3$. Dans ce cas, on peut surveiller l'évolution de la concentration en NH$_3$ en amont et/ou en aval du système SCR, afin notamment de contrôler la concentration de NH$_3$ en amont d'un système SCR, par exemple en réglant l'injection d'un agent ammoniacal dans le système SCR, ou de gérer les problématiques d'émission non désirée de NH$_3$ lors d'un fonctionnement avec un système SCR. Un ODB incluant le diagnostic de NH$_3$ est alors possible, un tel diagnostic pouvant être requis à l'avenir par la règlementation sur les émissions polluantes des moteurs à combustion interne de véhicules roulants.

Dans le procédé selon l'invention, la concentration de chaque espèce chimique est déterminée à partir de la mesure optique effectuée sur les gaz d'échappement et de la signature optique propre à chaque espèce chimique. Chaque espèce chimique gazeuse dont on souhaite mesurer la concentration absorbe en effet une partie du rayonnement UV et présente un spectre d'absorption qui lui est propre (absorbance en fonction de la longueur d'onde).

Lors de l'étape d'estimation de la concentration [X] d'au moins une espèce chimique et de la température T des gaz d'échappement, on effectue les opérations a), b) et c) décrites ci-dessous.

a) on détermine l'absorbance A des gaz d'échappement en fonction de la longueur d'onde W à partir du signal numérique de l'intensité lumineuse 50 généré par le spectromètre et issu de la détection de la partie du rayonnement UV ayant traversé les gaz d'échappement, et à partir d'un signal numérique de référence. Le signal numérique de référence est établi de préférence lors de l'étape préalable de calibration décrite plus haut. En particulier, l'absorbance des gaz d'échappement est calculée selon la formule (I) ci-dessous :

$$Absorbance \ = \ -\ln\left(\frac{Signal_{gaz\ echappement}}{Signal_{référence}}\right) \qquad\qquad (I)$$

b) On détermine, à l'aide de moyens d'analyse et de traitement du signal tel qu'un microprocesseur, la concentration [X] de chaque espèce chimique que l'on souhaite mesurer, à partir de l'absorbance A des gaz d'échappement et de caractéristiques prédéterminées d'absorbance, de température et de pression de chacune des espèces chimiques. Ces caractéristiques prédéterminées d'absorbance, de température et de pression de chacune des espèces chimiques sont de préférence obtenues lors de campagnes de mesure préalables permettant de créer une bibliothèque. Des données issues de la littérature peuvent également venir alimenter une telle bibliothèque. Par caractéristique d'absorbance d'une espèce chimique donnée on entend son coefficient d'extinction molaire.

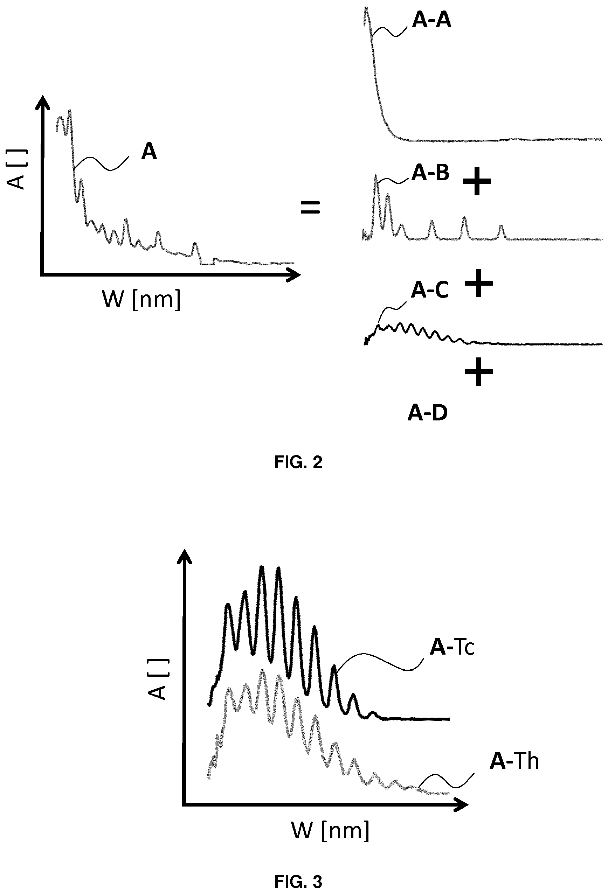

La figure 2 représente schématiquement l'absorbance A des gaz d'échappement comportant différentes espèces chimiques gazeuses A, B, C que l'on souhaite mesurer. Le diagramme de gauche représente un exemple d'absorbance A (sans unité) des gaz d'échappement, exprimée en fonction de la longueur d'onde W (en nm), calculée à partir du signal numérique de l'intensité lumineuse 50 généré par le spectromètre et du signal numérique de référence. L'absorbance A des gaz d'échappement est une fonction de la longueur d'absorbance, c'est-à-dire la longueur du chemin optique traversé par la lumière dans la zone de mesure située dans la ligne d'échappement, de la densité numérique des molécules des espèces chimiques gazeuses (A, B, C) contenues dans les gaz, et du coefficient d'extinction molaire. Le coefficient d'extinction molaire, aussi appelé absorptivité molaire, est une mesure de probabilité qu'un photon soit en interaction avec un atome ou molécule.

Le densité numérique des molécules d'une espèce chimique est elle-même fonction de la température, de la pression et de la concentration de l'espèce chimique, et le coefficient d'extinction molaire est fonction de la longueur d'onde, de l'espèce chimique, de la température et de la pression.

Ainsi, en disposant des caractéristiques prédéterminées du coefficient d'extinction molaire, de température et de pression de chacune des espèces chimiques, il est possible de déterminer la concentration [X] de chaque espèce chimique X à partir de l'absorbance A des gaz d'échappement. Les valeurs d'absorbance de chaque espèce chimique s'additionnent, et leur somme est typiquement égale aux valeurs d'absorbance A des gaz d'échappement, au bruit et à l'absorbance des autres espèces chimiques non mesurées près. C'est ce qui est représenté à droite sur la figure 2 par les diagrammes d'absorbance A-A, A-B, et A-C des espèces chimiques A, B et C, qui s'additionnent pour former l'absorbance A des gaz d'échappement, au bruit et aux autres espèces chimiques non détectées près AD. Différents types d'algorithmes peuvent être utilisés pour les calculs de concentration, tels que des algorithmes d'ajustement des moindres carrés appliqués aux signaux d'absorbance eux-mêmes, aux dérivés des signaux d'absorbance ou à la partie de fréquence des signaux d'absorbance (typiquement dérivé d'une transformée de Fourier). De même, un certain nombre de méthodes chimiométriques peuvent être utilisées pour ce processus comme, par exemple, l'analyse des composants principaux (PCA) ou les algorithmes des moindres carrés partiels (PLS).

c) On détermine la température T des gaz d'échappement par modification du coefficient d'extinction molaire de l'absorbance d'une espèce chimique dont on souhaite mesurer la concentration, ladite absorbance de l'espèce chimique étant extraite de l'absorbance desdits gaz d'échappement. La modification du coefficient d'extinction molaire peut être un décalage de la longueur d'onde, conduisant à une absorption à des longueurs d'ondes différentes, ou une modification de l'amplitude de l'absorbance à une longueur d'onde donnée, ou une combinaison des deux. Lorsque le comportement exact de la température d'une espèce chimique est connu, par le biais de mesures préalables ou de données issues de la littérature, permettant de créer une bibliothèque, cette espèce chimique peut être utilisée comme indicateur de température. Le degré de précision sur la détermination de la température dépend de la sensibilité du coefficient d'extinction molaire de l'espèce chimique dans la gamme de longueur d'onde mesurée.

La figure 3 illustre l'influence de la température sur l'absorbance d'une espèce chimique, ici l'ammoniac, exploitée pour déterminer la température selon la présente invention. La courbe A-Tc représente l'absorbance de $NH_3$ pour une température faible, par exemple 20°C, et la courbe A-Th représente l'absorbance de $NH_3$ pour une température élevée, par exemple 450°C. Une modification du coefficient d'extinction molaire par exemple aboutit à un décalage du signal d'absorption. Bien que l'exemple donné porte sur l'ammoniac, toute autre espèce chimique comme NO, $NO_2$, $N_2O$, BTX, $SO_2$, $H_2S$, $O_3$, $O_2$, $H_2O$, les aldéhydes comme l'acétaldéhyde ou le formaldéhyde, des hydrocarbures non aromatiques comme l'acétylène ou le buta-1,3-diène, peut être utilisée pour déterminer la température. Le même type d'algorithmes que ceux utilisés pour déterminer la concentration des espèces chimiques peut être utilisé pour déterminer la température.

Ainsi, le procédé et le système de mesure selon l'invention permettent d'accéder à la température des gaz d'échappement sans appareil de mesure supplémentaire, classiquement un thermocouple. La mesure instantanée de la température, qui est le résultat d'un traitement spécifique du signal d'absorption UV, associée à la mesure de la concentrations d'espèces chimiques gazeuses contenues dans les gaz, procure un net avantage dans les différentes stratégies de contrôle moteur, ainsi que pour l'évaluation en ligne de l'efficacité de systèmes de dépollution etc.

Le tableau 1 ci-dessous, et le diagramme de gauche de la figure 2, illustrent un exemple de mesure effectuée selon l'invention. La mesure est effectué sur un mélange gazeux synthétique, créé à partir d'espèces gazeuses pures, et dont on connait les concentrations exactes en chacune des espèces gazeuses.

Dans le tableau 1, les valeurs réelles, connues par la synthèse du mélange gazeux pour ce qui est des concentrations et par un thermocouple pour la température du mélange gazeux, sont comparées aux valeurs obtenues par la mesure selon l'invention.

Tableau 1

| Gaz d'échappement | Valeurs réelles | Valeurs mesurées |
|---|---|---|
| $NH_3$ [ppm] | 43 | 37,8 |
| NO [ppm] | 226 | 220 |
| $NO_2$ [ppm] | 257 | 275 |
| $SO_2$ [ppm] | 20 | 19,4 |
| $O_2$ [%] | 5,7 | 6,9 |
| $H_2O$ [%] | 3,6 | 3,2 |
| Température [°C] | 105,7 | 108,3 |

Un exemple de gammes de mesure obtenues avec le procédé selon l'invention pour les concentrations des différentes espèces chimiques sont illustrées dans le tableau 2 ci-dessus.

Les valeurs données dans le tableau 2 sont des estimations réalisées à partir de la mesure sur différents mélanges gazeux de synthèses donnés, à diverses conditions de température (à température ambiante et à 100°C), avec un chemin d'absorbance de 11 cm. Les plages de concentration et la précision peuvent varier en fonction de la concentration des espèces chimiques gazeuses présentes dans les gaz d"échappement, de la température, de la pression et du matériel utilisé dans le système de mesure optique (type de source, de spectromètre, autres éléments optiques etc.). La plage de mesure peut être adaptée en faisant varier le chemin optique pour toutes les espèces chimiques gazeuses. Dans ce cas, un chemin optique plus court étend la gamme de mesure mais diminue la sensibilité, alors qu'un chemin optique plus grand réduit la gamme de mesure mais augmente la sensibilité.

Tableau 2

| Espèces chimiques | Valeur max | RMSE | Valeur min |
|---|---|---|---|
| $NH_3$ [ppm] | 300 | 3 | 0 |
| NO [ppm] | 797 | 8 | 0 |
| $NO_2$ [ppm] | 2393 | 24 | 0 |
| $SO_2$ [ppm] | 473 | 5 | 0 |
| $O_2$ [%] | 100 | 3 | 0 |
| $CO_2$ | 100 | 9 | 0 |
| $H_2O$ | 6 | 0.06 | 0 |
| Toluene [ppm] | 17 | 0 | 0 |
| $C_4H_6$ [ppm] | 979 | 10 | 0 |
| $C_2H_2$ [ppm] | 8814 | 88 | 0 |

L'invention s'applique avantageusement au domaine de la dépollution des gaz d'échappement. Dans ce cadre, le système de mesure optique peut être positionné à différents endroits sur la ligne d'échappement pour effectuer une mesure in situ de concentration et de température adaptée à la surveillances des émissions polluantes en amont et/ou en aval d'un système de dépollution des gaz post combustion.

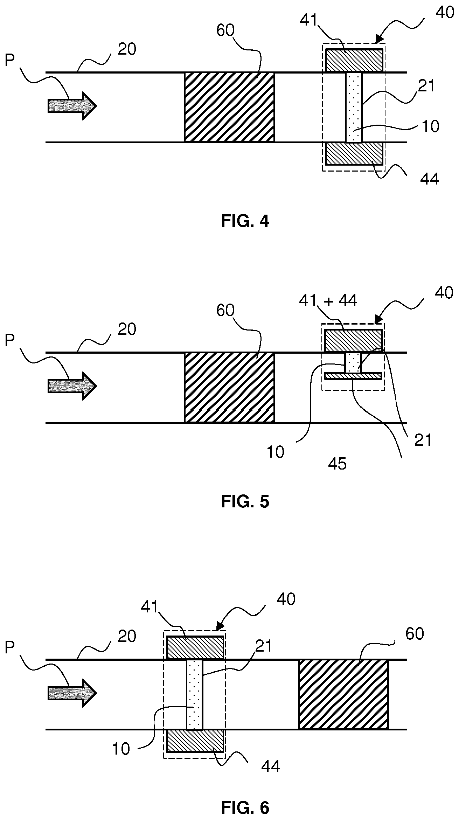

Selon un mode de réalisation, la mesure est effectuée en aval d'au moins un système de dépollution des gaz d'échappement tel qu'un catalyseur à oxydation diesel (DOC), un système SCR ou un FAP. Un tel mode de réalisation est représenté schématiquement à la figure 4. Les gaz d'échappement 10 circulent dans la ligne d'échappement 20 selon le parcours P, sur laquelle est placée un système de dépollution 60, par exemple un DOC, un système SCR ou un FAP. Le système de dépollution peut également être celui d'un moteur essence, comme un catalyseur trois voies, un autre système de dépollution classiquement utilisé sur mes moteurs Diesel, comme un PNA (« partial NOx adsorber » en anglais) ou un piège à NOx (« NOx trap » en anglais). Le système de dépollution comporte un ou plusieurs unités élémentaires de dépollution, chaque unité élémentaire de dépollution pouvant être un pain catalytique et/ou un filtre, catalysé ou non, et modifie la composition ou le contenu des gaz d'échappement. Selon le mode de réalisation représenté à la figure 4, le système de mesure optique 40 est placé en aval du système de dépollution 60. Les positions amont et aval sont définies par rapport au sens de circulation des gaz d'échappement dans la ligne d'échappement. La mesure de température des gaz d'échappement et de la concentration de certaines espèces chimiques des gaz d'échappement en aval du système de dépollution 60 permet de vérifier le respect des normes d'émissions des substances polluantes, de suivre leur évolution, et si nécessaire d'ajuster le fonctionnement du système de dépollution pour modifier les quantités de ces substances émises.

Selon un autre un mode de réalisation, représenté à la figure 5, la mesure in situ est effectuée de manière identique à celle du mode de réalisation représenté à la figure 4, à l'exception que le système de mesure optique comporte un réflecteur 45 pour une mesure réflective. Le système de mesure optique est celui décrit en relation avec la figure 2. La source 41 et le spectromètre 44 sont placés du même côté de la ligne d'échappement 20, c'est-à-dire à une même extrémité de la zone de mesure 21, opposée à celle où est positionné le réflecteur 45.

Selon un autre un mode de réalisation, la mesure in situ est effectuée en amont d'au moins un système de dépollution des gaz d'échappement tel que les trois systèmes cités ci-dessus (DOC, SCR, FAP). Un tel mode de réalisation est représenté schématiquement à la figure 6, identique à la figure 4 à l'exception du système de mesure optique 40 positionné en amont du système de dépollution 60. Un tel mode de réalisation peut être utile pour obtenir des informations de température et de concentration d'espèces chimiques des gaz d'échappement avant leur entrée dans le système de dépollution, et d'utiliser ces informations pour influer par exemple sur le fonctionnement du système de dépollution 60.

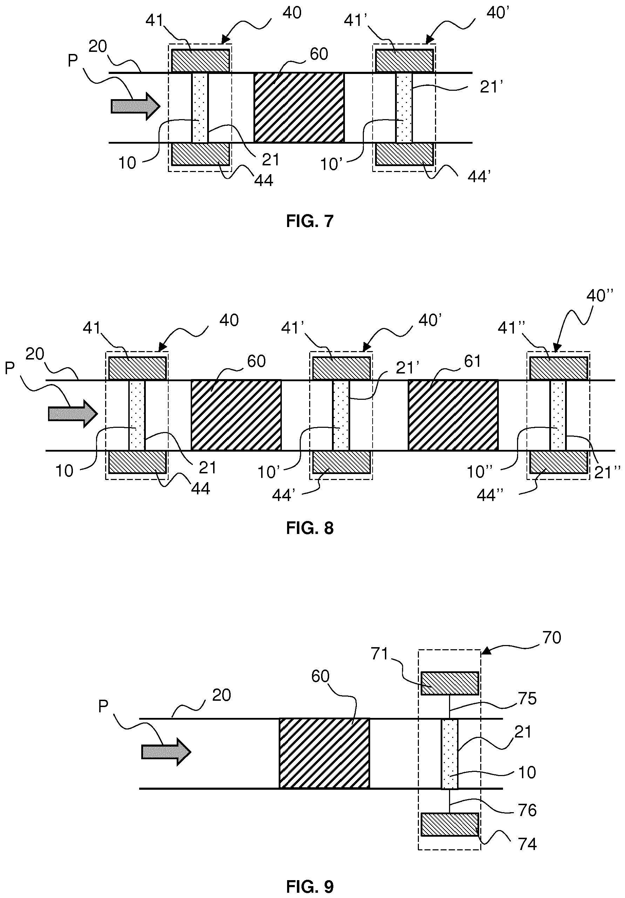

Selon un mode de réalisation, la mesure in situ est effectuée en amont et en aval d'au moins un système de dépollution des gaz d'échappement tel que les trois systèmes cités précédemment (DOC, SCR, FAP). Un exemple selon ce mode est illustré à la figure 7, dans lequel deux système de mesures optiques 40 et 40' sont placés respectivement en amont et en aval d'un système de dépollution 60. Le deuxième système de mesure optique 40' est identique au premier système de mesure optique 40 disposé en amont, et comprend une source de lumière 40' et un analyseur de lumière 44' permettant respectivement l'émission du rayonnement UV et la détection et l'analyse du rayonnement UV ayant traversé les gaz d'échappement dans la zone de mesure 21' située sur la ligne d'échappement 20, afin de fournir une estimation de la concentration d'espèces chimiques gazeuses et de la température des gaz d'échappement. Un autre exemple selon ce mode est illustré à la figure 7, dans lequel la ligne d'échappement comprend deux système de dépollution 60 et 61, et trois systèmes de mesure optique 40, 40', et 40", placés respectivement en amont du premier système de dépollution 60, entre les systèmes de dépollution 60 et 61, et en aval du système de dépollution 61. Un tel mode de réalisation, permet en outre de connaître l'efficacité de chaque système de dépollution sur la ligne d'échappement, et d'éventuellement régler les système de dépollution en fonction des informations de concentration et de température obtenues en amont, en aval et entre les systèmes de dépollution, afin de contrôler les émissions polluantes en sortie de ligne d'échappement.

Selon un mode de réalisation, la source de lumière UV et/ou le spectromètre du système de mesure optique est relié à la ligne d'échappement par une fibre optique, permettant plus de souplesse dans l'intégration du système de mesure optique à la ligne d'échappement, notamment dans le cadre d'un système embarqué à bord d'un véhicule. Un exemple d'un tel mode de réalisation est représenté à la figure 9, où des fibres optiques 75 et 76 relient respectivement la source de lumière 71 et le spectromètre 74 du système de mesure optique 70 à la ligne d'échappement 20, au niveau de la zone de mesure 21 où les gaz d'échappement sont traversés par le rayonnement UV conduit par les fibres optiques 75 et 76.

Pour chacun des modes de réalisations représentés aux figures 5 à 9, le système optique peut être celui décrit en relation avec la figure 2, comprenant un réflecteur 45.

Selon un mode de réalisation, le système de mesure optique comprend plusieurs zones de mesure reliés à une seule source lumineuse et un seul spectromètre, au moyen de fibres optiques. Un tel mode de réalisation permet par exemple de réduire le coût de la mise en œuvre de la mesure optique dans le cas où des mesures en amont et en aval de systèmes de dépollution sont souhaitées. Un exemple d'un tel mode de réalisation est illustré à la figure 10, dans lequel le système de mesure optique 80 comprend trois zones de mesure 21, 22 et 23, et un unique système d'éclairage 81 et de détection/analyse 84 relié aux zones de mesures par des fibres optiques 85, 87 et 88.

Selon un autre un mode de réalisation, la mesure in situ est effectuée de manière identique à celle du mode de réalisation représenté à la figure 10, à l'exception que le système de mesure optique comporte trois réflecteur 45, 45' et 45" tels que décrits en relation avec la figure 2, respectivement disposés aux extrémités des zones de mesure 21, 22 et 23.

Selon un mode de réalisation, illustré à la figure 12, le système de mesure optique 90 comprend des moyens de protection 95 de la source lumineuse 91 et/ou du spectromètre 94. De tels moyens de protection sont utiles par exemple lors d'un fonctionnement à froid du système de mesure optique, afin d'empêcher un encrassement des éléments optiques, tel que déjà expliqué plus haut. Ces moyens de protection peuvent comprendre un volet pouvant être contrôlé par la mesure de la température des gaz d'échappement, une barrière d'air entre la source lumineuse 91 ou le spectromètre 94 et les gaz d'échappement traversant la zone de mesure 21, un revêtement spécifique, par exemple pour une isolation thermique ou pour empêcher l'adhésion de liquide ou de particules solides, de la ou les surfaces séparant la source lumineuse 91 des gaz d'échappement ou le spectromètre 94 des gaz d'échappement, ou un moyen de chauffage desdites surfaces. Il peut également s'agir d'une géométrie spécifique du capteur optique, non représenté dans la figure 12.

Selon un mode de réalisation, illustré à la figure 13, le système de mesure optique 90 est du type celui représenté à la figure 2, et le chemin optique est du rayonnement UV est sensiblement tangent au parcours P des gaz d'échappement, le système optique étant par exemple positionné au niveau d'un coude de la ligne d'échappement 20.

Selon un autre mode de réalisation, illustré à la figure 14, le système de mesure optique 90 est du type celui représenté à la figure 2, et le chemin optique est du rayonnement UV est sensiblement parallèle au parcours P des gaz d'échappement. L'ensemble source de lumière 91 et spectromètre 94 sont situés à la sortie de la ligne d'échappement.

La présente invention s'applique avantageusement à la surveillance des émissions polluantes de gaz d'échappement issus d'un moteur à combustion interne dans le domaine des transports, en particulier celui des véhicules roulants, mais également à la surveillance des émissions polluantes dans le cas d'applications fixes comme les fumées industrielles d'installations de combustion.

Dans le domaine des transports, en particulier celui des véhicules roulants, la présente invention peut être utilisée pour surveiller les système de dépollution post combustion, et éventuellement contrôler, c'est-à-dire intervenir dans le réglage, de tels système de dépollution.

La présente invention peut en outre s'appliquer au domaine de la surveillance des émissions polluantes de gaz d'échappement issus d'un moteur à combustion interne de navires, notamment la surveillance des NOx dans les zones en d'émission contrôlée (ECA), en plus de la surveillance des SOx dans les zones d'émission contrôlée de soufre (SECA).

## Revendications

1. Procédé de mesure in situ de la concentration ([X]) d'au moins une espèce chimique gazeuse contenue dans des gaz d'échappement (10) circulant dans une ligne d'échappement (20) et de la température (T) desdits gaz d'échappement au moyen d'un système de mesure optique (40, 40', 40", 70, 80, 90), ledit système de mesure optique comprenant au moins une source lumineuse (41, 41', 41", 71, 81, 91) et un spectromètre (44, 44', 44", 74, 84, 94), comportant les étapes suivantes :

   - l'émission par la source lumineuse d'un rayonnement UV (42) à travers lesdits gaz d'échappement au sein d'une zone de mesure (21, 22, 23) située dans la ligne d'échappement (20) ;
   - la détection par le spectromètre d'au moins une partie dudit rayonnement UV ayant traversé lesdits gaz d'échappement (43) dans ladite zone de mesure (21, 22, 23) et la génération d'un signal numérique de l'intensité lumineuse (50) en fonction de la longueur d'onde (W) de ladite partie du rayonnement UV ayant traversé lesdits gaz d'échappement;
   - l'estimation de la concentration ([X]) de ladite espèce chimique et de la température (T) desdits gaz d'échappement à partir dudit signal numérique (50).

2. Procédé selon la revendication 1, dans lequel le système de mesure optique comporte en outre un réflecteur (45, 45', 45"), et ledit procédé comprend une étape dans laquelle ledit rayonnement UV (42) émis par la source de lumière (41) traverse lesdits gaz d'échappement dans la zone de mesure (21) pour ensuite être réfléchi par le réflecteur (45, 45', 45"), traverse à nouveau lesdits gaz d'échappement dans la zone de mesure (21) en sens inverse pour être ensuite détecté par le spectromètre (44).

3. Procédé selon l'une des revendications 1 ou 2, comportant une étape préalable de calibration du système de mesure optique pour fournir un signal numérique de référence de l'intensité lumineuse en fonction de la longueur d'onde, de préférence par émission dudit rayonnement UV à travers un gaz de référence, par exemple un gaz de référence ne contenant aucune des espèces chimiques à mesurer, et par détection d'au moins une partie dudit rayonnement UV ayant traversé ledit gaz de référence pour fournir un signal numérique de référence de l'intensité lumineuse en fonction de la longueur d'onde de ladite partie du rayonnement UV ayant traversé ledit gaz de référence.

4. Procédé selon l'une des revendications précédentes, dans lequel l'étape d'estimation de la concentration ([X]) de ladite espèce chimique et de la température (T) desdits gaz d'échappement (10) comporte :

- la détermination de l'absorbance (A) desdits gaz d'échappement en fonction de la longueur d'onde à partir dudit signal numérique de l'intensité lumineuse (50) en fonction de la longueur d'onde de ladite partie du rayonnement UV ayant traversé lesdits gaz d'échappement (43) et d'un signal numérique de référence ;
- la détermination de la concentration ([X]) de ladite au moins une espèce chimique à partir de l'absorbance desdits gaz d'échappement et de caractéristiques prédéterminées d'absorbance, de température et de pression de ladite espèce chimique ;
- la détermination de la température (T) desdits gaz d'échappement par modification du coefficient d'extinction molaire de l'absorbance de ladite espèce chimique extraite de l'absorbance desdits gaz d'échappement, ladite modification étant un décalage de la longueur d'onde ou une modification de l'amplitude ou une combinaison des deux.

5. Procédé selon la revendication 4, dans lequel l'absorbance (A) desdits gaz d'échappement (10) est une fonction de la longueur d'absorption, du nombre de densité des molécules de ladite espèce chimique et du coefficient d'extinction molaire.

6. Procédé selon l'une des revendications précédentes, dans lequel le rayonnement UV (42) émis a une longueur d'onde comprise entre 180 et 400 nm, de préférence comprise entre 180 et 280 nm, et encore plus préférentiellement comprise entre 180 et 240 nm.

7. Procédé selon l'une des revendications précédentes, dans lequel on mesure la concentration d'au moins une, et de préférence plusieurs, espèces chimiques gazeuses contenues dans les gaz d'échappement, et comprises dans la liste constituée par : NO, $NO_2$, $N_2O$, BTX, $SO_2$, $H_2S$, $O_3$, $O_2$, $H_2O$, les aldéhydes comme l'acétaldéhyde ou le formaldéhyde, des hydrocarbures non aromatiques comme l'acétylène ou le buta-1,3-diène.

8. Procédé selon l'une des revendications précédentes, dans lequel on mesure simultanément la concentration d'au moins deux espèces chimiques gazeuses, et de préférence d'au moins la concentration de NO et la concentration de $NO_2$.

9. Procédé selon la revendication 7, appliqué au contrôle des NOx en sortie d'un système de dépollution (60, 61), de préférence en sortie d'un système de réduction catalytique sélective (SCR), ou appliqué au contrôle des NOx en amont et en aval d'un système de dépollution (60, 61), dans lequel on mesure au moins la concentration de NO et la concentration de $NO_2$, de préférence pour estimer la conversion en temps réel des NOx en $N_2$ par ledit système de dépollution.

10. Procédé selon l'une des revendications précédentes, dans lequel on mesure la concentration d'au moins une espèce chimique gazeuse choisie parmi les espèces chimiques soufrées $SO_2$ et $H_2S$, et de préférence les deux.

11. Procédé selon l'une des revendications précédentes, dans lequel on mesure la concentration d'au moins $NH_3$.

12. Procédé selon la revendication 11, appliqué au contrôle du $NH_3$ en amont ou en aval d'un système de réduction catalytique sélective (SCR), dans lequel on surveille l'évolution de la concentration en $NH_3$ en amont ou en aval du système de réduction catalytique sélective (SCR).

13. Procédé selon l'une des revendications précédentes, dans lequel les gaz d'échappement sont issus d'un moteur à combustion interne.

14. Procédé selon l'une des revendications précédentes, dans lequel ledit rayonnement UV traverse lesdits gaz d'échappement selon un chemin optique sensiblement perpendiculaire au parcours (P) desdits gaz d'échappement.

**15.** Procédé selon l'une des revendications précédentes, dans lequel la mesure in situ est effectuée en aval d'au moins un système de dépollution (60, 61) des gaz d'échappement tel qu'un catalyseur à oxydation diesel (DOC), un système de réduction catalytique sélective (SCR) ou un filtre à particules (FAP).

**16.** Procédé selon l'une des revendications précédentes, dans lequel la mesure in situ est effectuée en amont d'au moins un système de dépollution (60, 61) des gaz d'échappement tel qu'un catalyseur à oxydation diesel (DOC), un système de réduction catalytique sélective (SCR) ou un filtre à particules (FAP).

**17.** Système de mesure optique (40, 40', 40", 70, 80, 90) pour la mesure in situ de la concentration ([X]) d'au moins une espèce chimique gazeuse contenue dans des gaz d'échappement (10) circulant dans une ligne d'échappement (20) et de la température (T) desdits gaz d'échappement selon l'une des revendications précédentes, ledit système comportant :

- une source lumineuse (41, 41', 41", 71, 81, 91) susceptible d'émettre un rayonnement UV (42) à travers lesdits gaz d'échappement au sein d'une zone de mesure (21, 22, 23) située dans la ligne d'échappement, ladite source lumineuse étant de préférence positionnée de manière à émettre ledit rayonnement UV selon un chemin optique sensiblement perpendiculaire au parcours (P) desdits gaz d'échappement ;
- un spectromètre (44, 44', 44", 74, 84, 94) susceptible de détecter au moins une partie dudit rayonnement UV ayant traversé lesdits gaz d'échappement (43) dans ladite zone de mesure (21, 22, 23) et la génération d'un signal numérique de l'intensité lumineuse (50) en fonction de la longueur d'onde (W) de ladite partie du rayonnement UV ayant traversé lesdits gaz d'échappement (43);
- des moyens d'analyse et de traitement dudit signal pour déterminer la concentration ([X]) de ladite espèce chimique et la température (T) desdits gaz d'échappement à partir dudit signal numérique (50).

## Patentansprüche

**1.** Verfahren zur In-situ-Messung der Konzentration([X]) mindestens einer gasförmigen chemischen Spezies, die in Abgasen (10) enthalten ist, die in einer Auspuffanlage (20) zirkulieren, und der Temperatur (T) der Abgase mittels eines optischen Messsystems (40, 40', 40", 70, 80, 90), wobei das optische Messsystem mindestens eine Lichtquelle (41, 41', 41", 71, 81, 91) und ein Spektrometer (44, 44', 44", 74, 84, 94) aufweist, umfassend die folgenden Schritte:

- das Emittieren, durch die Lichtquelle, einer UV-Strahlung (42) durch die Abgase hindurch in einem Messbereich (21, 22, 23), der in der Auspuffanlage (20) gelegen ist;
- das Detektieren, durch das Spektrometer, mindestens eines Teils der UV-Strahlung, der die Abgase (43) durchdrungen hat, in dem Messbereich (21, 22, 23) und das Erzeugen eines digitalen Signals der Lichtstärke (50) in Abhängigkeit von der Wellenlänge (W) des Teils der UV-Strahlung, der die Abgase durchdrungen hat;
- das Schätzen der Konzentration ([X]) der chemischen Spezies und der Temperatur (T) der Abgase anhand des digitalen Signals (50).

**2.** Verfahren nach Anspruch 1, bei dem das optische Messsystem ferner einen Reflektor (45, 45', 45") aufweist und das Verfahren einen Schritt umfasst, bei dem die von der Lichtquelle (41) emittierte UV-Strahlung (42) die Abgase in dem Messbereich (21) durchdringt, um anschließend von dem Reflektor (45, 45', 45") reflektiert zu werden, die Abgase in dem Messbereich (21) erneut in Gegenrichtung durchdringt, um anschließend von dem Spektrometer (44) detektiert zu werden.

**3.** Verfahren nach einem der Ansprüche 1 oder 2, umfassend einen vorherigen Schritt des Kalibrierens des optischen Messsystems, um ein digitales Referenzsignal der Lichtstärke in Abhängigkeit von der Wellenlänge auszugeben, bevorzugt durch Emittieren der UV-Strahlung durch ein Referenzgas hindurch, beispielsweise ein Referenzgas, das keine der zu messenden chemischen Spezies enthält, und durch Detektieren mindestens eines Teils der UV-Strahlung, der das Referenzgas durchdrungen hat, um ein digitales Referenzsignal der Lichtstärke in Abhängigkeit von der Wellenlänge des Teils der UV-Strahlung, der das Referenzgas durchdrungen hat, auszugeben.

**4.** Verfahren nach einem der vorhergehenden Ansprüche, bei dem der Schritt des Schätzens der Konzentration ([X]) der chemischen Spezies und der Temperatur (T) der Abgase (10) umfasst:

- das Bestimmen der Absorbanz (A) der Abgase in Abhängigkeit von der Wellenlänge anhand des digitalen Signals der Lichtstärke (50) in Abhängigkeit von der Wellenlänge des Teils der UV-Strahlung, der die Abgase (43) durchdrungen hat, und eines digitalen Referenzsignals;
- das Bestimmen der Konzentration ([X]) der mindestens einen chemischen Spezies anhand der Absorbanz der Abgase und von vorbestimmten Absorbanz-, Temperatur- und Druckmerkmalen der chemischen Spezies;
- das Bestimmen der Temperatur (T) der Abgase durch Ändern des molaren Extinktionskoeffizienten der Absorbanz der chemischen Spezies, die aus der Absorbanz der Abgase extrahiert wird, wobei die Änderung ein Versatz der Wellenlänge oder eine Änderung der Amplitude oder eine Kombination der beiden ist.

5. Verfahren nach Anspruch 4, bei dem die Absorbanz (A) der Abgase (10) eine Funktion der Absorbanzlänge, der Dichtezahl der Moleküle der chemischen Spezies und des molaren Extinktionskoeffizienten ist.

6. Verfahren nach einem der vorhergehenden Ansprüche, bei dem die emittierte UV-Strahlung (42) eine Wellenlänge zwischen 180 und 400 nm, bevorzugt zwischen 180 und 280 nm und noch bevorzugter zwischen 180 und 240 nm hat.

7. Verfahren nach einem der vorhergehenden Ansprüche, bei dem die Konzentration von mindestens einer und bevorzugt von mehreren gasförmigen chemischen Spezies gemessen wird, die in den Abgasen enthalten sind und in der Liste inbegriffen sind, die gebildet wird durch: $NO$, $NO_2$, $N_2O$, BTX, $SO_2$, $H_2S$, $O_3$, $O_2$, $H_2O$, Aldehyde wie Acetaldehyd oder Formaldehyd, nicht aromatische Kohlenwasserstoffe wie Acetylen oder Buta-1,3-dien.

8. Verfahren nach einem der vorhergehenden Ansprüche, bei dem gleichzeitig die Konzentration von mindestens zwei gasförmigen chemischen Spezies gemessen wird und bevorzugt mindestens die NO-Konzentration und die $NO_2$-Konzentration.

9. Verfahren nach Anspruch 7, angewandt auf die Kontrolle der NOx am Ausgang eines Reinigungssystems (60, 61), bevorzugt am Ausgang eines Systems zur selektiven katalytischen Reduktion (SCR), oder auf die Kontrolle der NOx stromauf und stromab eines Reinigungssystems (60, 61), bei dem mindestens die NO-Konzentration und die $NO_2$-Konzentration gemessen werden, bevorzugt zum Schätzen der Umwandlung der NOx in $N_2$ durch das Reinigungssystem in Echtzeit.

10. Verfahren nach einem der vorhergehenden Ansprüche, bei dem die Konzentration mindestens einer gasförmigen chemischen Spezies, die unter den schwefelhaltigen chemischen Spezies $SO_2$ und $H_2S$ ausgewählt ist, und bevorzugt von beiden gemessen wird.

11. Verfahren nach einem der vorhergehenden Ansprüche, bei dem die Konzentration mindestens von $NH_3$ gemessen wird.

12. Verfahren nach Anspruch 11, angewandt auf die Kontrolle von $NH_3$ stromauf und stromab eines Systems zur selektiven katalytischen Reduktion (SCR), bei dem der Verlauf der $NH_3$-Konzentration stromauf und stromab des Systems zur selektiven katalytischen Reduktion (SCR) überwacht wird.

13. Verfahren nach einem der vorhergehenden Ansprüche, bei dem die Abgase aus einem Verbrennungsmotor stammen.

14. Verfahren nach einem der vorhergehenden Ansprüche, bei dem die UV-Strahlung die Abgase gemäß einem optischen Pfad durchdringt, der im Wesentlichen senkrecht zum Weg (P) der Abgase verläuft.

15. Verfahren nach einem der vorhergehenden Ansprüche, bei dem die In-situ-Messung stromab mindestens eines Reinigungssystems (60, 61) der Abgase wie eines Dieseloxidationskatalysators (DOC), eines Systems zur selektiven katalytischen Reduktion (SCR) oder eines Partikelfilters (FAP) durchgeführt wird.

16. Verfahren nach einem der vorhergehenden Ansprüche, bei dem die In-situ-Messung stromauf mindestens eines Reinigungssystems (60, 61) der Abgase wie eines Dieseloxidationskatalysators (DOC), eines Systems zur selektiven katalytischen Reduktion (SCR) oder eines Partikelfilters (FAP) durchgeführt wird.

17. Optisches Messsystem (40, 40', 40", 70, 80, 90) zur In-situ-Messung der Konzentration ([X]) mindestens einer gasförmigen chemischen Spezies, die in Abgasen (10) enthalten ist, die in einer Auspuffanlage (20) zirkulieren, und der Temperatur (T) der Abgase nach einem der vorhergehenden Ansprüche, wobei das System aufweist:

- eine Lichtquelle (41, 41', 41", 71, 81, 91), die geeignet ist, eine UV-Strahlung (42) durch die Abgase hindurch in einem in der Auspuffanlage gelegenen Messbereich (21, 22, 23) zu emittieren, wobei die Lichtquelle bevorzugt so angeordnet ist, dass sie die UV-Strahlung gemäß einem optischen Pfad emittiert, der im Wesentlichen senkrecht zum Weg (P) der Abgase verläuft;
- ein Spektrometer (44, 44', 44", 74, 84, 94), das geeignet ist, mindestens einen Teil der UV-Strahlung, der die Abgase (43) durchdrungen hat, in dem Messbereich (21, 22, 23) zu detektieren, und das Erzeugen eines digitalen Signals der Lichtstärke (50) in Abhängigkeit von der Wellenlänge (W) des Teils der UV-Strahlung, der die Abgase (43) durchdrungen hat;
- Mittel zur Analyse und Verarbeitung des Signals, um die Konzentration ([X]) der chemischen Spezies und die Temperatur (T) der Abgase anhand des digitalen Signals (50) zu bestimmen.

## Claims

1. Method for the in-situ measurement of the concentration [X] of at least one gaseous chemical species contained in exhaust gases (10) circulating in an exhaust line (20) and of the temperature (T) of said exhaust gases by means of an optical measurement system (40, 40', 40", 70, 80, 90), said optical measurement system comprising at least one light source (41, 41', 41", 71, 81, 91) and a spectrometer (44, 44', 44", 74, 84, 94), comprising the following steps:

   - the emission, by the light source, of UV radiation (42) through said exhaust gases within a measurement area (21, 22, 23) situated in the exhaust line (20);
   - the detection, by the spectrometer, of at least a portion of said UV radiation that has passed through said exhaust gases (43) in said measurement area (21, 22, 23) and the generation of a digital signal of the light intensity (50) depending on the wavelength (W) of said portion of the UV radiation that has passed through said exhaust gases;
   - the estimation of the concentration [X] of said chemical species and of the temperature (T) of said exhaust gases, from said digital signal (50).

2. Method according to Claim 1, wherein the optical measurement system further comprises a reflector (45, 45', 45"), and said method comprises a step in which said UV radiation (42) emitted by the light source (41) passes through said exhaust gases in the measurement area (21) to then be reflected by the reflector (45, 45', 45"), and passes once again through said exhaust gases in the measurement area (21) in the opposite direction to then be detected by the spectrometer (44).

3. Method according to one of Claims 1 and 2, comprising a preliminary step of calibrating the optical measurement system in order to supply a reference digital signal of the light intensity as a function of the wavelength, preferably by emitting said UV radiation through a reference gas, for example a reference gas containing none of the chemical species that are to be measured, and by detecting at least a portion of said UV radiation that has passed through said reference gas in order to supply a reference digital signal of the light intensity as a function of the wavelength of said portion of the UV radiation that has passed through said reference gas.

4. Method according to one of the preceding claims, wherein the step of estimating the concentration ([X]) of said chemical species and the temperature (T) of said exhaust gases (10) involves:

   - determining the absorbance (A) of said exhaust gases as a function of the wavelength, from said digital signal of the light intensity (50) as a function of the wavelength of said portion of the UV radiation that has passed through said exhaust gases (43) and a reference digital signal;
   - determining the concentration ([X]) of said at least one chemical species, from the absorbance of said exhaust gases and from predetermined characteristics pertaining to the absorbance, temperature and pressure of said chemical species;
   - determining the temperature (T) of said exhaust gases by modifying the coefficient of molar extinction for the absorbance of said chemical species, extracted from the absorbance of said exhaust gases, said modification representing a shift in the wavelength or a modification to the amplitude or a combination of both.

5. Method according to Claim 4, wherein the absorbance (A) of said exhaust gases (10) is a function of the absorption length, of the density number of the molecules of said chemical species and of the coefficient of molar extinction.

6. Method according to one of the preceding claims, wherein the UV radiation (42) emitted has a wavelength comprised between 180 and 400 nm, preferably comprised between 180 and 280 nm, and more preferably still, comprised between 180 and 240 nm.

7. Method according to one of the preceding claims, wherein the concentration of at least one, and preferably several, gaseous chemical species contained in the exhaust gases and included in the list consisting of: NO, $NO_2$, $N_2O$, BTX, $SO_2$, $H_2S$, $O_3$, $O_2$, $H_2O$, aldehydes such as acetaldehyde or formaldehyde, non-aromatic hydrocarbons such as acetylene or buta-1,3-diene, is measured.

8. Method according to one of the preceding claims, wherein the concentration of at least two gaseous chemical species, and preferably at least the concentration of NO and the concentration of $NO_2$ are measured simultaneously.

9. Method according to Claim 7, applied to checking the NOx at the outlet of a pollution-control system (60, 61), preferably at the outlet of a selective catalytic reduction (SCR) system, or applied to checking the NOx upstream and downstream of a pollution-control system (60, 61), wherein at least the concentration of NO and the concentration of $NO_2$ are measured, preferably in order to estimate the real-time conversion of NOx to $N_2$ by said pollution-control system.

10. Method according to one of the preceding claims, wherein the concentration of at least one gaseous chemical species selected from the sulfur-containing chemical species $SO_2$ and $H_2S$ is measured, and preferably both.

11. Method according to one of the preceding claims, wherein the concentration of at least $NH_3$ is measured.

12. Method according to Claim 11 applied to checking the $NH_3$ upstream or downstream of a selective catalytic reduction (SCR) system, wherein the evolution of the $NH_3$ concentration upstream or downstream of the selective catalytic reduction (SCR) system is monitored.

13. Method according to one of the preceding claims, wherein the exhaust gases originate from an internal combustion engine.

14. Method according to one of the preceding claims, wherein said UV radiation passes through said exhaust gases along an optical path substantially perpendicular to the path (P) of said exhaust gases.

15. Method according to one of the preceding claims, wherein the in-situ measurement is performed downstream of at least one system (60, 61) for the pollution control of exhaust gases, such as a diesel oxidation catalytic converter (DOC), a selective catalytic reduction (SCR) system or a diesel particulate filter (DPF).

16. Method according to one of the preceding claims, wherein the in-situ measurement is performed upstream of at least one system (60, 61) for the pollution control of exhaust gases, such as a diesel oxidation catalytic converter (DOC), a selective catalytic reduction (SCR) system or a diesel particulate filter (DPF).

17. Optical measurement system (40, 40', 40", 70, 80, 90) for the in-situ measurement of the concentration ([X]) of at least one gaseous chemical species contained in exhaust gases (10) circulating in an exhaust line (20) and of the temperature (T) of said exhaust gases according to one of the preceding claims, said system comprising:

- a light source (41, 41', 41", 71, 81, 91) capable of emitting UV radiation (42) through said exhaust gases within a measurement area (21, 22, 23) situated in the exhaust line, said light source preferably being positioned in such a way as to emit said UV radiation along an optical path substantially perpendicular to the path (P) of said exhaust gases;
- a spectrometer (44, 44', 44", 74, 84, 94) capable of detecting at least a portion of said UV radiation that has passed through said exhaust gases (43) in said measurement area (21, 22, 23) and the generation of a digital signal of the light intensity (50) depending on the wavelength (W) of said portion of the UV radiation that has passed through said exhaust gases (43);
- means for analyzing and processing said signal in order to determine the concentration ([X]) of said chemical species and the temperature (T) of said exhaust gases, from said digital signal (50).

**FIG. 1A**

**FIG. 1B**

**FIG. 2**

**FIG. 3**

FIG. 4

FIG. 5

FIG. 6

FIG. 7

FIG. 8

FIG. 9

**FIG. 10**

**FIG. 11**

**FIG. 12**

**FIG. 13**

**FIG. 14**

## RÉFÉRENCES CITÉES DANS LA DESCRIPTION

**Documents brevets cités dans la description**

- US 20130045541 A
- EP 0107535 A
- US 2015308962 A1